# EUROPÄISCHE PATENTSCHRIFT

(11) **EP 3 622 876 B1**
(45) Veröffentlichungstag und Bekanntmachung des Hinweises auf die Patenterteilung: **26.10.2022**
(21) Anmeldenummer: 19195810.7
(22) Anmeldetag: 06.09.2019
(51) Int. Cl.: A47L 15/42

(54) **GESCHIRRSPÜLMASCHINE, INSBESONDERE HAUSHALTSGESCHIRRSPÜLMASCHINE**
DISHWASHER, IN PARTICULAR A DOMESTIC DISHWASHING MACHINE
LAVE-VAISSELLE, EN PARTICULIER LAVE-VAISSELLE ÉLECTROMÉNAGER

(30) Priorität: 11.09.2018 DE 102018122125; 09.01.2019 DE 102019100353
(43) Veröffentlichungstag der Anmeldung: 18.03.2020
(73) Patentinhaber: Miele & Cie. KG, 33332 Gütersloh (DE)
(72) Erfinder: Bertram, Andre, 33609 Bielefeld (DE); Dahms, Tobias, 30519 Hannover (DE); Steinmeier, Ralph, 32052 Herford (DE); Kornfeld, André, 33378 Rheda-Wiedenbrück (DE)

(56) Entgegenhaltungen:
- EP-A1- 2 471 434
- EP-A2- 2 206 824
- DE-A1-102016 221 051
- JP-A- 2008 136 639

## Beschreibung

Die Erfindung betrifft eine Geschirrspülmaschine, insbesondere in der Ausgestaltung einer Haushaltsgeschirrspülmaschine, mit einem einen Spülraum bereitstellenden Spülbehälter, der der Aufnahme von zu reinigendem Spülgut dient, und mit einer Wärmepumpeneinrichtung, die einen Verdampfer aufweist, der innerhalb eines mit einem Wärmespeichermedium befüllten Tanks angeordnet ist.

Geschirrspülmaschinen der eingangs genannten Art sind aus dem Stand der Technik an sich gut bekannt, so z. B. aus der EP 2 206 824 A2 und der EP 3 375 345 A1.

Die Wärmepumpeneinrichtung einer Geschirrspülmaschine hat den Sinn und Zweck, den Gesamtenergieverbrauch der Geschirrspülmaschine im bestimmungsgemäßen Verwendungsfall zu reduzieren. Zu diesem Zweck wird dem im Tank der Wärmepumpeneinrichtung bevorrateten Wärmespeichermedium Wärmeenergie entzogen und auf die im Betriebsfall umgewälzte Spülflotte zur Aufheizung derselben übertragen. Infolge eines solchen Wärmeenergieentzugs kommt es zur Abkühlung des Wärmespeichermediums. Typischerweise kommt als Wärmespeichermedium Wasser zum Einsatz, dass durch den Wärmeenergieentzug bis zur Vereisung abgekühlt wird.

Von Nachteil einer solchen Wasser-Wasser-Wärmepumpeneinrichtung ist unter anderem, dass ein bestimmungsgemäßer Einsatz der Geschirrspülmaschine unter gleichzeitiger Nutzung der Wärmepumpeneinrichtung energetisch nur dann sinnvoll ist, wenn das im Tank bevorratete Wasser eine gewisse Mindesttemperatur aufweist. Sollte dieses nach einer vorangegangenen Geschirrspülmaschinennutzung noch zu kühl oder sogar gefroren sein, muss mit einem bestimmungsgemäßen Einsatz der Wärmepumpeneinrichtung bis zum Erreichen einer Mindesttemperatur gewartet werden, was bei noch gefrorenem Wasser durchaus 24 Stunden in Anspruch nehmen kann. Eine bestimmungsgemäße Verwendung der Geschirrspülmaschine unter Einsatz der Wärmepumpeneinrichtung ist mithin pro Tag nur einmal möglich.

Um die Regenerationszeit des Tanks mit dem Ziel einer schnelleren Wiedereinsatzbereitschaft der Wärmepumpeneinrichtung zu reduzieren, ist es aus dem Stand der Technik bekannt, Umgebungsluft für eine beschleunigte Wiederherstellung der Mindesttemperatur des abgekühlten oder eingefrorenen Wassers zu verwenden. Anstelle von Umgebungsluft ist auch der Einsatz von aus dem Spülraum stammender Luft bekannt, wie dies beispielsweise mit der schon eingangs genannten EP 3 375 345 A1 beschrieben ist.

Insbesondere im Falle einer Außenbeaufschlagung des Tanks mit Umgebungsluft kann es zu ungewünschter Kondensatbildung an den Außenoberflächen des Tanks kommen. Dies ist insofern problematisch, als dass zum Tank benachbarte elektrische Bauteile der Geschirrspülmaschine gefährdet sind.

Um diesem Problem zu begegnen, ist es aus dem Stand der Technik bekannt, die Umgebungsluft zu sensieren. Wird hierbei eine zu hohe Lufttemperatur und/oder Luftfeuchtigkeit ermittelt, so bleibt die Wärmepumpeneinrichtung zur Vermeidung einer ungewollten Kondensatbildung ungenutzt und es erfolgt eine ausschließlich konventionelle Aufheizung der Spülflotte. Die eigentlich mit der Wärmepumpeneinrichtung wünschenswerterweise zu erzielende Reduzierung des Energieverbrauchs wird dann aber in nachteiliger Weise nicht erreicht.

Die DE 10 2016 221 051 A1 offenbart eine Geschirrspülmaschine mit einer Wärmepumpeneinrichtung, die einen Verdampfer aufweist, wobei Umgebungsluft mittels einer Ventilatoreinheit über den Verdampfer geleitet, dort abgekühlt und entfeuchtet und anschließend weiter in den Spülraum geleitet wird. Die Geschirrspülmaschine umfasst darüber hinaus eine Kondensatabführung für am Verdampfers anfallendes Kondensat.

Es ist ausgehend vom Vorbeschriebenen die **Aufgabe** der Erfindung, eine Geschirrspülmaschine der eingangs genannten Art vorzuschlagen, die konstruktiv sicherstellt, dass bei gleichzeitig verkürzter Tankregenerationszeit ein bestimmungsgemäßer Betrieb der Wärmepumpeneinrichtung unabhängig von der Luftfeuchtigkeit und/oder Temperatur der Umgebungsluft möglich ist.

Zur **Lösung** dieser Aufgabe wird mit der Erfindung eine Geschirrspülmaschine mit den Merkmalen von Anspruch 1 vorgeschlagen.

Die erfindungsgemäße Ausgestaltung sieht eine Ventilatoreinheit vor. Diese dient dazu, eine Beaufschlagung des Tanks mit Umgebungsluft vorzunehmen, was ein Wiederaufwärmen des abgekühlten oder eingefrorenen Wassers im Tank auf eine Mindesttemperatur beschleunigt, was im Ergebnis eine verkürzte Regenerationszeit für den Tank zur Folge hat. Um der vorerläuterten Problematik der Kondensatbildung zu begegnen, ist erfindungsgemäß des Weiteren eine Kondensationseinrichtung vorgesehen. Diese Kondensationseinrichtung dient dazu, eine gezielte Kondensation zu bewirken, so dass dabei entstehende Kondensat aufgefangen und abgeleitet werden kann. Zu diesem Zweck verfügt die Kondensationseinrichtung über eine Kondensationsfläche. An dieser Kondensationsfläche kommt es im bestimmungsgemäßen Verwendungsfall zur gezielten Kondensation aus der Luftfeuchtigkeit der Umgebungsluft. Des Weiteren verfügt die Kondensationseinrichtung über einen Sammelbehälter. In diesem Sammelbehälter sammelt sich das an der Kondensationsfläche entstehende Kondensat an, was eine spätere Kondensatweiterbehandlung gestattet.

Da die erfindungsgemäß vorgesehene Kondensationseinrichtung dafür Sorge trägt, dass die in der Umgebungsluft, mit der der Tank mittels der Ventilatoreinheit beaufschlagt wird, enthaltene Feuchte gezielt auskondensiert und das so entstehende Kondensat aufgefangen wird, ist ein bestimmungsgemäßer Betrieb der Wärmepumpeneinrichtung unabhängig von der Temperatur und/oder der Luftfeuchtigkeit der Umgebungsluft möglich. Besonderer Schutzmaßnahmen für z. B. elektrische Bauteile der Geschirrspülmaschine bedarf es insofern nicht.

Gemäß der Erfindung ist vorgesehen, dass die Kondensationsfläche von einer Außenoberfläche des Tanks bereitgestellt ist. Diese Ausgestaltung erbringt in vorteilhafter Weise eine einfache Konstruktion, denn es wird die ohnehin vorhandene Wandung des Tanks bzw. deren Außenoberfläche als Kondensationsfläche genutzt.

Gemäß einem weiteren Merkmal der Erfindung ist vorgesehen, dass der Sammelbehälter durch den Tank gebildet ist. Auch diese Maßnahme erbringt eine im Ergebnis einfache Konstruktion. Als Sammelbehälter dient der Tank selbst, so dass es keiner gesonderten Ausbildung eines zum ohnehin vorhandenen Tank zusätzlichen Sammelbehälters bedarf.

Es ist gemäß einem weiteren Merkmal der Erfindung vorgesehen, dass die die Kondensationsfläche bereitstellende Außenoberfläche des Tanks von einer in Höhenrichtung des Tanks oberen Tankwandung bereitgestellt ist. Gemäß dieser Ausführungsform dient die Außenoberfläche der den Tank oberseitig verschließenden Wandung als Kondensationsfläche. Im Betriebsfall entsteht damit Kondensat oberhalb des vom Tank bereitgestellten Tankvolumens, was es gestattet, entstehendes Kondensat in den als Sammelbehälter dienenden Tank der Gewichtskraft folgend strömen zu lassen. Zu diesem Zweck ist gemäß einem weiteren Merkmal der Erfindung vorgesehen, dass die obere Tankwandung eine Durchlassöffnung aufweist.

Gemäß der vorbeschriebenen Konstruktion ist in denkbar einfacher Weise erreicht, dass im Betriebsfall außenseitig der oberen Tankwandung entstehendes Kondensat sicher aufgefangen wird, indem es durch die dafür vorgesehene Durchlassöffnung in der oberen Tankwandung in den Tank strömt.

Es ist gemäß einem weiteren Merkmal der Erfindung vorgesehen, dass die obere Tankwandung ein in Richtung der Durchlassöffnung weisendes Gefälle aufweist. Es kann beispielsweise eine trichterförmige Ausgestaltung der oberen Tankwandung vorgesehen sein. Diese Ausgestaltung stellt sicher, dass sich bildendes Kondensat zur Durchlassöffnung und von dort aus in den Tank geleitet wird. Dies stellt eine vollständige Überführung von sich ausgebildetem Kondensat in den Tankinnenraum sicher.

Es ist gemäß einem weiteren Merkmal der Erfindung vorgesehen, dass die übrigen Außenoberflächen des Tanks wärmeisoliert ausgebildet sind. Hierdurch ist sichergestellt, dass es tatsächlich nur an der oberen Tankwandung und nicht an den übrigen Außenoberflächen des Tanks zur Kondensatausbildung kommt. Eine zielgerichtete Kondensatbildung ist damit sichergestellt.

Gemäß einer alternativen Ausgestaltung der Erfindung ist vorgesehen, dass die Kondensationsfläche von wenigstens zwei Außenoberflächen des Tanks bereitgestellt ist. Gemäß dieser Ausführungsform findet im bestimmungsgemäßen Verwendungsfall mithin nicht nur eine Kondensatbildung an der oberen Tankwandung statt. Es wird vielmehr die Außenoberfläche wenigstens einer zweiten Tankwandung als Kondensationsfläche genutzt. Im Vergleich zur ersten Ausführungsform ist so eine vergrößerte Kondensationsfläche geschaffen.

Gemäß dieser zweiten Ausführungsform ist es nach einem weiteren Merkmal der Erfindung vorgesehen, dass der Tank geschlossen ausgebildet ist. Die geschlossene Tankausgestaltung bietet sich deshalb an, weil das an wenigstens zwei Außenflächen des Tanks entstehende Kondensat nicht sicher in den Tank abgeführt werden kann, weshalb es keiner entsprechenden Durchtrittsöffnung in einer der Tankwandungen bedarf.

Es ist in diesem Zusammenhang gemäß einem weiteren Merkmal vorgesehen, dass der Tank innerhalb des Sammelbehälters angeordnet ist. Im Unterschied zur ersten Ausführungsform bildet also nicht der Tank selbst den Sammelbehälter. Es ist vielmehr ein zum Tank separat ausgebildeter Sammelbehälter vorgesehen, in welchem der Tank angeordnet ist. Im bestimmungsgemäßen Verwendungsfall kommt es zur Kondensatausbildung außenseitig der wenigstens zwei Tankwandungen, wobei das entstehende Kondensat der Gewichtskraft folgend nach unten abströmt und sich so in dem Sammelbehälter ansammelt.

Der Sammelbehälter kann gemäß einem weiteren Merkmal der Erfindung als einseitig offene Schale ausgebildet sein. Es ist so eine einfache Konstruktion erreicht, die auch eine herstellerseitige einfache Montage gestattet.

Der Sammelbehälter ist gemäß einem weiteren Merkmal der Erfindung an einen Luftführungskanal strömungstechnisch angeschlossen, in welchen Kanal die Ventilatoreinheit integriert ist. Eine solche Ausgestaltung erbringt den Vorteil einer gerichteten Luftströmung. Diese bringt den Vorteil, dass eine gezielte Beaufschlagung der Kondensationsfläche möglich ist. Dabei ist die Ausbildung eines solchen Luftführungskanals unabhängig davon, ob der Tank als Sammelbehälter dient oder ob ein zum Tank separat ausgebildeter Sammelbehälter vorgesehen ist.

Gemäß einem weiteren Merkmal der Erfindung ist vorgesehen, dass der Tank oder der Sammelbehälter an eine Überlaufleitung strömungstechnisch angeschlossen ist. Infolge des im bestimmungsgemäßen Verwendungsfall entstehenden Kondensats kommt es zu einem Pegelanstieg je nach Ausführungsform entweder in dem als Sammelbehälter dienenden Tank oder in dem zum Tank separat ausgebildeten Sammelbehälter. Um ein Überlaufen zu vermeiden, ist ab einem gewissen Pegelstand das sich im Tank oder Sammelbehälter befindliche Kondensat abzuführen. Es ist deshalb eine Überlaufleitung vorgesehen, die an den Tank oder den Sammeltopf strömungstechnisch angeschlossen ist.

Die Überlaufleitung ist gemäß einem weiteren Merkmal der Erfindung anderendseitig an den Spülraum strömungstechnisch angeschlossen, mündet also in diesen ein. Es ist so eine Überführung von Kondensat aus dem Tank oder dem Sammeltopf in den Spülraum möglich, wo es zu einer Vermischung mit Spülflotte kommt, entweder zu Beginn eines Spülprogramms zur Nutzung des Kondensats im nachfolgenden Spülprogramm oder am Ende eines Spülprogramms, so dass das Kondensat zusammen mit der verbrauchten Spülflotte verworfen werden kann.

Es ist gemäß einem weiteren Merkmal der Erfindung vorgesehen, dass der Tank mit Kühlrippen ausgerüstet ist. Dies erbringt einen verstärkten Wärmeeintrag aus der Umgebungsluft in das vom Tank als Wärmespeichermedium bevorratete Wasser.

Mit der Erfindung wird insgesamt eine Konstruktion vorgeschlagen, die in vorteilhafter Weise eine verkürzte Regenerationszeit für den Tank einer Wasser-Wasser-Wärmepumpeneinrichtung erbringt. Dabei entsteht das im bestimmungsgemäßen Betriebsfall nicht zu vermeidende Kondensat ausschließlich an dafür vorgesehenen Flächen, was dann gezielt aufgefangen und in den Spülraum abgeleitet werden kann. Damit ist ein Betrieb der Wärmepumpeneinrichtung unabhängig von der Temperatur und/oder der Feuchtigkeit der Umgebungsluft möglich. Ein Abschalten der Wärmepumpeneinrichtung bei zu hoher Temperatur und/oder zu hoher Luftfeuchtigkeit der Umgebungsluft ist damit in vorteilhafter Weise vermieden.

Weitere Merkmale und Vorteile der Erfindung ergeben sich aus der nachfolgenden Beschreibung anhand der Figuren. Dabei zeigen:
- Figur 1:: in schematischer Seitenansicht eine erfindungsgemäße Geschirrspülmaschine gemäß einer ersten Ausführungsform;
- Figur 2:: in schematischer Seitenansicht ausschnittsweise die erste Ausführungsform nach Figur 1;
- Figur 3:: in schematischer Seitenansicht ausschnittsweise in Anlehnung an die Darstellung nach Figur 1 eine zweite Ausführungsform;
- Figur 4:: in schematischer Seitenansicht ausschnittsweise in Anlehnung an die Darstellung nach Figur 1 eine dritte Ausführungsform;
- Figur 5:: die dritte Ausführungsform nach Figur 4 in einer um 90° gedrehten schematischen Seitenansicht;
- Figur 6:: in schematischer Seitenansicht ausschnittsweise in Anlehnung an die Darstellung nach Figur 1 eine vierte Ausführungsform;
- Figur 7:: in schematischer Seitenansicht eine erfindungsgemäße Geschirrspülmaschine gemäß einer fünften Ausführungsform in einer ersten Betriebsstellung;
- Figur 8:: in schematischer Seitenansicht eine erfindungsgemäße Geschirrspülmaschine gemäß einer fünften Ausführungsform in einer zweiten Betriebsstellung;
- Figur 9:: in schematischer Seitenansicht ausschnittsweise in Anlehnung an die Darstellung nach Figur 1 eine erste Ausführungsform einer Erfindungsalternative;
- Figur 10:: in schematischer Seitenansicht ausschnittsweise eine zweite Ausführungsform der Erfindungsalternative nach Figur 9 und
- Figur 11:: in schematischer Seitenansicht der Grundaufbau einer erfindungsgemäßen Geschirrspülmaschine.

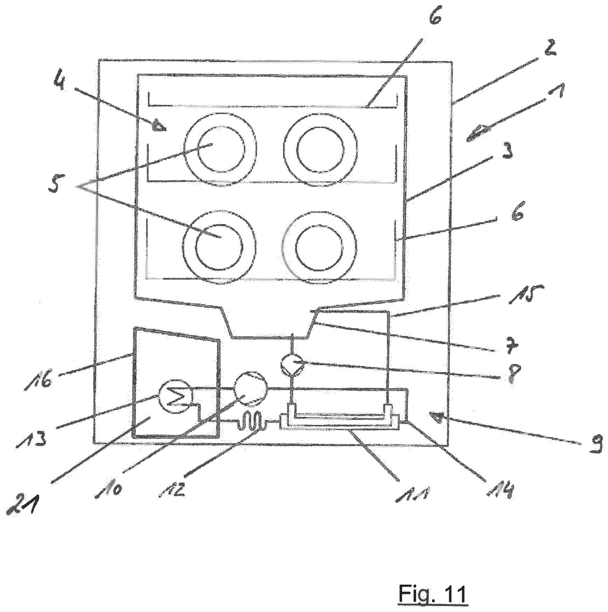

Figur 11 lässt in rein schematischer Darstellung den Grundaufbau einer erfindungsgemäßen Geschirrspülmaschine 1 erkennen.

Die Geschirrspülmaschine 1 verfügt über ein Gehäuse 2, das unter anderem einen Spülbehälter 3 aufnimmt. Der Spülbehälter 3 stellt seinerseits einen Spülraum 4 bereit, der im bestimmungsgemäßen Verwendungsfall der Aufnahme von zu reinigendem Spülgut 5 dient.

Zur Beschickung von zu reinigendem Spülgut 5 mit Spülflotte dient eine in den Figuren nicht näher dargestellte Sprüheinrichtung, die innerhalb des Spülbehälters 3 angeordnet ist. Bevorzugter Weise verfügt eine solche Sprüheinrichtung über Sprüharme, die jeweils verdrehbar innerhalb des Spülbehälters 3 angeordnet sind.

Im gezeigten Ausführungsbeispiel dienen zur Aufnahme des zu reinigenden Spülguts 5 Spülgutträger 6 in Form von Spülkörben, wobei drei solcher Spülkörbe vorgesehen sind.

Der Spülraum 4 mündet in einen im Detail nicht näher dargestellten Sammeltopf 7 des Spülbehälters 3 ein, an den eine Umwälzpumpe 8 strömungstechnisch angeschlossen ist. Über entsprechende, in der Figur nicht näher dargestellte Versorgungsleitungen ist die in der Figur ebenfalls nicht dargestellte Sprüheinrichtung an die Umwälzpumpe 8 strömungstechnisch angeschlossen. Im bestimmungsgemäßen Verwendungsfall kann damit eine Beschickung der Sprüheinrichtung mit Spülflotte mittels von der Umwälzpumpe 8 umgewälzter Spülflotte stattfinden.

Die Geschirrspülmaschine 1 verfügt des Weiteren über eine Wärmepumpeneinrichtung 9. Diese weist einen Verdichter 10, einen Verflüssiger 11, ein Expansionsorgan in Form einer Drossel 12, einen Verdampfer 13 sowie einen diese Baukomponenten strömungstechnisch miteinander verbindenden Strömungskreislauf 14 auf, in dem ein Arbeitsmedium geführt ist.

Der Verdampfer 13 ist innerhalb eines Tanks 16 angeordnet, der mit Wasser 21 als Wärmeträgermedium befüllt ist.

Im bestimmungsgemäßen Verwendungsfall der Wärmepumpeneinrichtung 9 findet mit Hilfe des Verflüssigers 11 ein Wärmeübertrag von dem im Strömungskreislauf 14 der Wärmepumpeneinrichtung 9 geführten Arbeitsmedium auf die Spülflotte statt. Zu diesem Zweck ist ein an die Umwälzpumpe 8 angeschlossener Umwälzkreislauf 15 vorgesehen, der der Spülflottenumwälzung dient. Die im Betriebsfall im Verflüssiger 11 durch Verflüssigung des Arbeitsmediums frei werdende Wärmeenergie wird mithin auf die im Umwälzkreislauf 15 umgewälzte Spülflotte übertragen, zu welchem Zweck ein entsprechend ausgebildeter Wärmetauscher vorgesehen ist.

Während eines Heizprozesses zur Aufheizung der Spülflotte wird dem als Wärmespeichermedium dienenden Wasser 21 Energie entzogen und dem von der Geschirrspülmaschine durchgeführten Reinigungsprozess durch Übergabe an die umgewälzte Spülflotte zugeführt. Dabei wird ein Großteil der Energie aus dem Phasenwechsel des Wassers gezogen, d. h. es kommt zu einem zumindest teilweisen Einfrieren des vom Tank 16 bevorrateten Wassers 21.

Vor dem nächsten Spülgang muss das Wasser 21 thermisch regeneriert werden, d. h. auf eine Mindesttemperatur wieder aufgewärmt werden, um erneut effizient mittels der Wärmepumpeneinrichtung 9 die Spülflotte aufheizen zu können. Um diese Regenerationsphase zu beschleunigen, wird erfindungsgemäß Umgebungsluft 18 als Wärmeenergieträger genutzt.

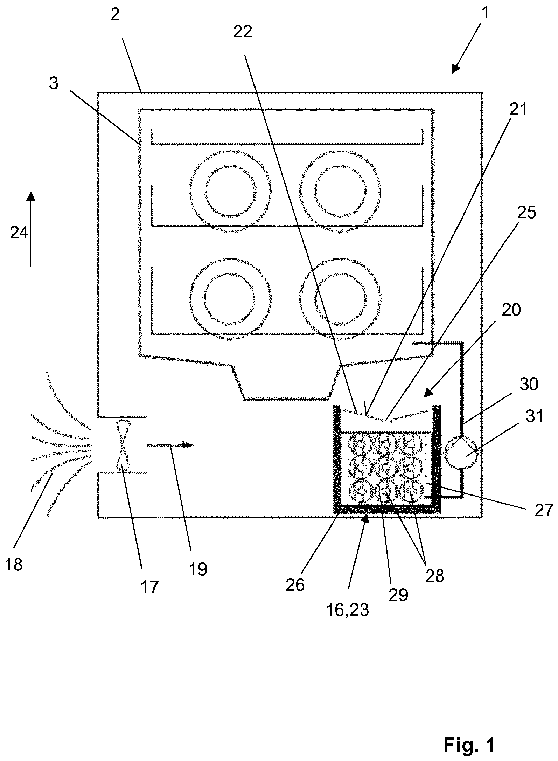

Die erfindungsgemäße Geschirrspülmaschine 1 verfügt deshalb über eine Ventilatoreinheit 17, wie sich dies beispielsweise aus Figur 1 ergibt. Im Betriebsfall fördert diese Ventilatoreinheit 17 Umgebungsluft 18 über den Tank 16, wie sich dies aus einer Zusammenschau der Figuren 1 bis 10 anhand unterschiedlicher Ausführungsformen ergibt.

Bevorzugter Weise erfolgt eine Beaufschlagung des Tanks 16 mit Umgebungsluft 18 nach Abschluss eines bestimmungsgemäß durchgeführten Spülprozesses. Alternativ kann eine Regeneration des Tanks 16, d. h. eine Beaufschlagung des Tanks 16 mit Umgebungsluft 18 auch schon während eines Spülprozesses beginnen, beispielsweise während einer durch die Wärmepumpeneinrichtung 9 unterstützten Aufheizung der Spülflotte.

Durch die mittels der Ventilatoreinheit 17 erzwungene Luftströmung kann der Wärmestrom in den Tank 16 bzw. in das davon bevorratete Wasser 21 im Vergleich zur freien Konvektion um ein Vielfaches erhöht werden. Im Ergebnis reduziert sich hierdurch die Zeit für die thermische Regeneration und die nächste bestimmungsgemäße Verwendung der Wärmepumpeneinrichtung 9 kann zu einem im Vergleich zum Stand der Technik früheren Zeitpunkt stattfinden.

Da sich das Wasser 21 durch den Wärmeentzug während einer Spülflottenaufheizung auf ca. 0° und somit deutlich unterhalb des Taupunktes der Umgebung abkühlt, kommt es auf der Oberfläche des Tanks 16 zu einer Kondensatbildung. Dies führt zu folgenden Effekten. Der Wärmestrom von kondensierender Luft liegt deutlich über dem von nur strömender Luft. Dies bewirkt eine zusätzliche Reduzierung der Regenerationszeit. Je größer der Volumenstrom der strömenden Luft ist, umso mehr feuchte Luft wird an den Tank herangetragen, kann auskondensieren und verringert die Regenerationszeit. Allerdings führt die Kondensation auch zu einer Ansammlung von Wasser am Tank und gefährdet, umliegende, elektrische Bauteile der Geschirrspülmaschine 1. Um diesem Problem zu begegnen wird mit der Erfindung eine Konstruktion vorgeschlagen, die sicherstellt, dass die Kondensation nur auf dafür vorgesehenen Flächen stattfindet und dass das anfallende Kondensat aufgefangen und gegebenenfalls abgepumpt wird.

Gemäß einer ersten Ausführungsform, wie sie in Figur 1 dargestellt ist, wird zu diesem Zweck mit der Erfindung vorgeschlagen, dass die Seitenflächen des Tanks 16 mit einer Wärmeisolierung 26 ausgerüstet sind. Die Dämmstärke beträgt dabei 5 mm bis 20 mm, bevorzugt 10 mm bis 15 mm bei einer Wärmeleitfähigkeit von λ = 0,04 W/mK bis λ = 0,03 W/mK. Dies bewirkt einen Anstieg der Oberflächentemperatur des Tanks 16 an diesen Flächen, so dass diese oberhalb des Taupunktes liegt. Infolgedessen fällt das Kondensat lediglich an der dafür vorgesehenen Kondensationsfläche 21 an, bei der es sich im gezeigten Ausführungsbeispiel um die Außenfläche der in Höhenrichtung 24 oberen Tankwandung 22 handelt.

Die Tankwandung 22 weist eine Durchlassöffnung 25 auf, durch die hindurch außenseitig der oberen Tankwandung 22 entstehendes Kondensat abgeführt und in den vom Tank 16 bereitgestellten Innenraum überführt wird. Um zu vermeiden, dass Kondensat ungewollt zu den äußeren Randkanten der oberen Tankwandung 22 fließt, ist die Tankwandung 22 mit einem in Richtung der Durchtrittsöffnung 21 weisenden Gefälle ausgerüstet. Beispielsweise kann die Tankwandung 22 trichterförmig ausgebildet sein, wie in Figur 1 dargestellt.

Der Tank 16 dient gemäß der Ausführungsform nach Figur 1 als Sammelbehälter 23 für das an der Tankwandung 22 entstehende Kondensat. Dabei bilden der Sammelbehälter 23, d. h. der Tank 16 und die Kondensationsfläche 21, d. h. die obere Tankwandung 22 die erfindungsgemäße Kondensationseinrichtung 20.

Im bestimmungsgemäßen Betriebsfall wird, wie in Figur 1 dargestellt, mittels der Ventilatoreinheit 17 Umgebungsluft 18 angesogen und in Richtung des Pfeils 19 zur Beaufschlagung des Tanks 16 mit Umgebungsluft gefördert. Das sich ausschließlich an der oberen Tankwandung 22 bildende Kondensat wird vom Tank 16 aufgefangen und sammelt sich hier an.

Da der Tank 16 nicht unendliche Mengen an Kondensat aufnehmen kann, sind bevorzugter Weise eine Füllstandsüberwachung sowie eine Pumpe 31 vorgesehen. Überschüssige Mengen an Kondensat können so abgepumpt und mittels einer Überlaufleitung 30 in den Spülraum 3 verbracht werden.

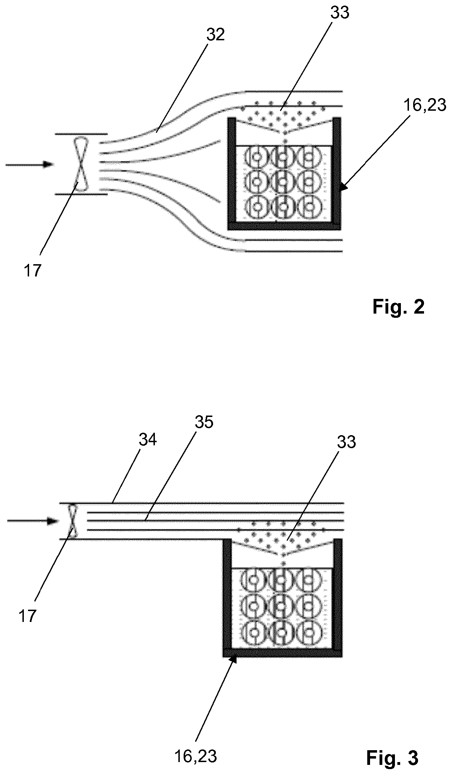

Die vom Ventilator 17 geförderte Umgebungsluft kann diffus über den Tank 16 geführt werden, so dass sich die in Figur 2 dargestellte diffuse Luftströmung 32 ergibt. Eine solche diffuse Strömung 32 bietet den Vorteil, dass die im Sockelbereich der Geschirrspülmaschine 1 unter Umständen vorhandene Restwärme durch ein Umströmen der warmen Baukomponenten der Geschirrspülmaschine, wie z. B. des Verdichters 10 mit zur Regeneration des Tanks 16 genutzt werden kann.

Alternativ zu einer diffusen Strömung ist eine gerichtete Luftströmung 35, wie diese in Figur 3 dargestellt ist. Zur Ausbildung einer gerichteten Luftströmung 35 ist ein Luftführungskanal 34 vorgesehen, an den der Tank 16 strömungstechnisch angeschlossen ist. Der Vorteil der gerichteten Luftströmung 35 besteht darin, dass die Luft gezielt nur über die Kondensationsfläche 21 geführt wird. Hierdurch kann ein größerer Volumenstrom über die Kondensationsfläche 21 erreicht werden.

Beiden Ausführungsformen nach den Figuren 2 und 3 ist gemein, dass sich ausbildendes Kondensat 33 im Tank 16 ansammelt, der insofern als Sammelbehälter 23 dient.

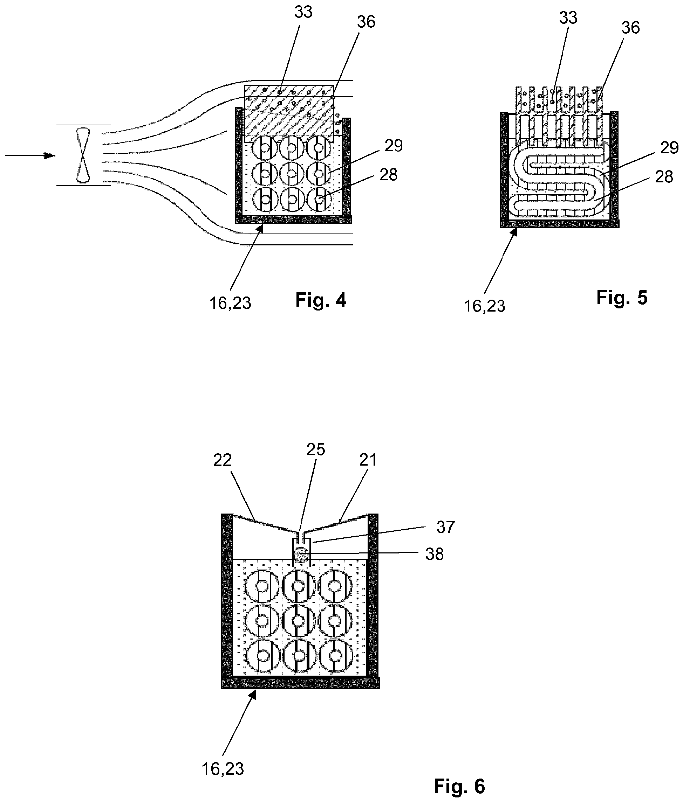

Zur weiteren Verbesserung des Wärmestroms in den Tank 16 kann die Oberfläche des Tanks 16 mit Kühlrippen 36 ausgerüstet sein. Diese Ausführungsform ist in den Figuren 4 und 5 dargestellt. Die Kühlrippen bestehen bevorzugter Weise aus Aluminium und sind in Strömungsrichtung ausgerichtet, wie dies die unterschiedlichen Ansichten nach den Figuren 4 und 5 im Vergleich erkennen lassen. Bevorzugter Weise besteht ein direkter Kontakt zwischen den Kühlrippen 36 und dem Wasser 21.

Da der Tank 16 zur Einleitung des Kondensats 33 offen gestaltet ist, wird zur Auslaufsicherung insbesondere im Transportfall ein Rückschlagventil vorgesehen, wie dies in Figur 6 dargestellt ist. Dieses Rückschlagventil kann beispielsweise dadurch gebildet sein, dass in einem sich an die Durchlassöffnung 25 anschließenden Einlassstutzen 37 ein Schwimmer 38 angeordnet ist. Bei steigendem Wasserpegel schwimmt der Schwimmer 38 auf und verschließt mit Erreichen eines Pegelhöchststandes die Durchtrittsöffnung 25.

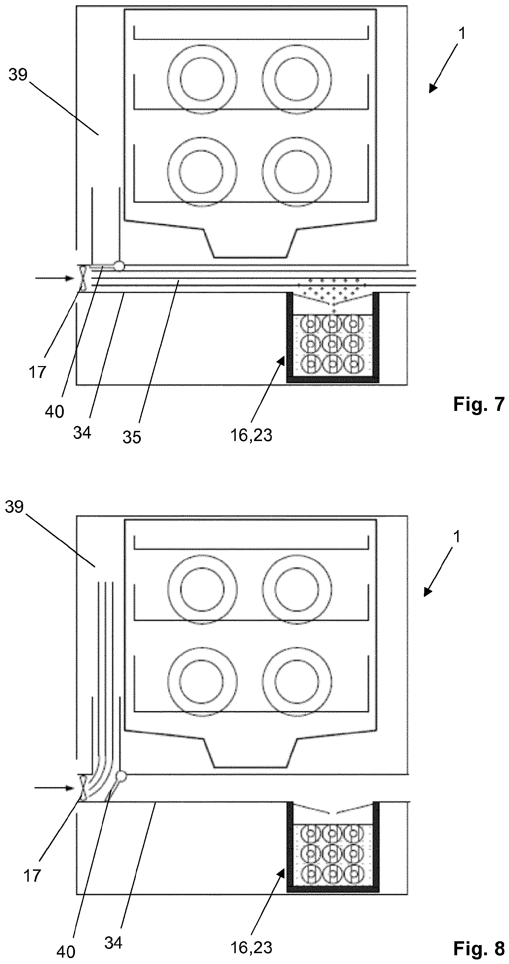

Die Figuren 7 und 8 zeigen eine weitere Ausführungsform. Zur Vereinfachung der gesamten Geschirrspülmaschinenkonstruktion ist gemäß dieser Ausführungsform vorgesehen, dass der für eine Kondensationstrocknung vorgesehene Luftkanal 39 und der für eine gerichtete Luftströmung 35 vorgesehene Luftführungskanal 34 miteinander strömungsgekoppelt sind. Mittels einer verschwenkbar angeordneten Klappe 40 kann wahlweise entweder der Luftkanal 39 oder der Luftführungskanal 34 mittels der Ventilatoreinheit 17 mit Umgebungsluft 18 versorgt werden. Gemäß dieser Konstruktion bedarf es zur Beschickung des Tanks 16 mit Umgebungsluft keines zusätzlichen Ventilators, es kann vielmehr die ohnehin für eine Kondensationstrocknung geschirrspülmaschinenseitig vorgesehene Ventilatoreinheit genutzt werden.

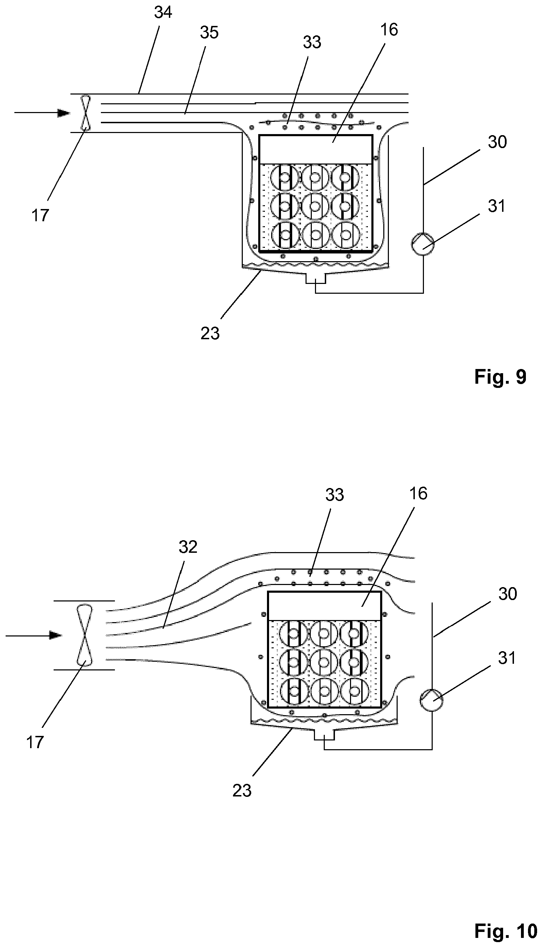

Eine alternative Ausgestaltung der Erfindung zeigen die Figuren 9 und 10 in zwei unterschiedlichen Ausführungsformen.

Alternativ zu den gedämmten Seitenflächen des Tanks 16 gemäß der Figuren 1 bis 8 zeigen die Figuren 9 und 10 eine Ausgestaltung, der gemäß der Tank 16 außenseitig dämmungsfrei ausgebildet ist. Damit dient nicht nur die in Höhenrichtung obere Tankwandung 22 als Kondensationsfläche 21, sondern auch die Außenseiten der Seitenwände sind Teil der Kondensationsfläche 21. Zum Auffangen des sich bildenden Kondensats 33 dient ein separat zum Tank 16 ausgebildeter Sammelbehälter 23, der den Tank 16 zumindest teilweise aufnimmt.

Von Vorteil dieser alternativen Ausgestaltung ist die im Vergleich zur ersten Ausführungsalternative vergrößerte Kondensationsfläche 21. Hierdurch ist eine Erhöhung des absoluten Wärmestroms und somit eine weitere Reduzierung der Regenerationszeit erreicht. Das Kondensat fällt nun jedoch nicht mehr ausschließlich auf der oberen Tankwandung 22 an, was ein Auffangen durch den zusätzlich ausgebildeten Sammelbehälter 23 erforderlich macht. Der Tank 16 kann gemäß dieser Ausführungsform vollständig geschlossen ausgebildet sein und für eine Ableitung von aufgefangenem Kondensat ist der Sammelbehälter 23 an eine Überlaufleitung 30 mit integrierter Pumpe 31 angeschlossen.

Auch gemäß der Erfindungsalternative kann die Umgebungsluft 18 entweder gerichtet oder diffus zum Tank 16 geleitet werden, wobei Figur 9 eine gerichtete Luftströmung 35 und Figur 10 eine diffuse Luftströmung 32 zeigt.

Verfahrensseitig können zwei Alternativen wie folgt vorgesehen sein.

### a) Betrieb der Ventilatoreinheit 17 während und nach einem Spülprogramm

Mit Beginn der Aufheizung der Spülflotte wird dem Tank 16 Energie entzogen, woraufhin dieser bzw. das darin enthaltene Wasser 21 auskühlen. Mit einer zeitlichen Verzögerung zum Beginn des Heizprozesses startet die Ventilatoreinheit 17. Diese zeitliche Verzögerung beträgt vorzugsweise über 5 Minuten und/oder unter 30 Minuten, insbesondere zwischen 10 Minuten und 20 Minuten.

Mit Start der Ventilatoreinheit 17 wird Umgebungsluft über den Tank 17 gefördert. Hierdurch wird bereits während des Heizprozesses der Wärmestrom in den Tank 16 vergrößert. Somit wird der Anteil der Heizenergie, welche aus der Umgebung stammt, vergrößert und der Tank 16 kühl weniger aus, so dass eine geringere Eismenge entsteht. Dies hat insbesondere den Vorteil, dass der Wirkungsgrad der Wärmepumpeneinrichtung 9 aufgrund der geringeren Eisschichtdicke und der damit zusammenhängenden höheren Verdampfungstemperatur geringfügig steigt und elektrische Energie eingespart werden kann. Ebenfalls kann während des Heizprozesses die Abwärme von elektrischen Komponenten wie z. B. dem Verdichter 10 besser genutzt werden.

Der Regenerationsprozess durch die Ventilatoreinheit 17 wird zeitgesteuert beendet. Dabei ist die Betriebsdauer der Ventilatoreinheit 17 insbesondere von der Umgebungstemperatur abhängig. Bei einer höheren Umgebungstemperatur reduziert sich die Regenerationszeit und die Ventilatoreinheit 17 kann früher abgeschaltet werden. Gemessen wird die Umgebungstemperatur mittels eines Temperatursensors.

Alternativ zur zeitgesteuerten Regeneration kann ein Temperatursensor im oder am Tank zur Abschaltung herangezogen werden. Überschreitet die Temperatur im oder am Tank einen gewissen Schwellwert, so gilt die Regeneration als abgeschlossen und die Ventilatoreinheit 17 kann abgeschaltet werden.

### b) Betrieb der Ventilatoreinheit nach einem Spülprogramm

Gemäß dieser Erfindungsalternative wird die Ventilatoreinheit 17 zur Regeneration des Tanks 16 erst nach einer Beendigung eines vorangegangenen Spülprogramms eingeschaltet. Dies bietet den Vorteil, dass der Aufwand für den Aufbau geringer ausfällt, da der Spülraum nicht von der von der Ventilatoreinheit geförderten Luft thermisch entkoppelt, d.h. isoliert sein muss. Der Abschaltvorgang erfolgt in Entsprechung der vorstehend beschriebenen ersten Variante.

Mit der erfindungsgemäßen Ausgestaltung wird erreicht, dass die Geschirrspülmaschine 1 unter allen klimatischen Bedingungen betrieben werden kann. Die thermische Regeneration wird verbessert, so dass ein erneuter Spülvorgang zeitnah erfolgen kann. Die Energieeinsparung ist dabei in vorteilhafter Weise nicht an das Umgebungsklima gebunden.

**Bezugszeichen**

| | | | |
|---|---|---|---|
| 1 | Geschirrspülmaschine | 21 | Kondensationsfläche |
| 2 | Gehäuse | 22 | Tankwandung |
| 3 | Spülbehälter | 23 | Sammelbehälter |
| 4 | Spülraum | 24 | Höhenrichtung |
| 5 | Spülgut | 25 | Durchlassöffnung |
| 6 | Spülgutträger | 26 | Wärmeisolierung |
| 7 | Sammeltopf | 27 | Wasser |
| 8 | Umwälzpumpe | 28 | Verdampferrohr |
| 9 | Wärmepumpeneinrichtung | 29 | Eismäntel |
| 10 | Verdichter | 30 | Überlaufleitung |
| 11 | Verflüssiger | 31 | Pumpe |
| 12 | Drossel | 32 | diffuse Luftströmung |
| 13 | Verdampfer | 33 | Kondensat |
| 14 | Strömungskreislauf (der Wärmepumpe) | 34 | Luftführungskanal |
| | | 35 | gerichtete Luftströmung |
| 15 | Umwälzkreislauf (der Spülflotte) | 36 | Kühlrippe |
| 16 | Tank | 37 | Einlassstutzen |
| 17 | Ventilatoreinheit | 38 | Schwimmer |
| 18 | Umgebungsluft | 39 | Luftkanal |
| 19 | Pfeil | 40 | Klappe |
| 20 | Kondensationseinrichtung | | |

## Patentansprüche

1. Geschirrspülmaschine, insbesondere Haushaltsgeschirrspülmaschine, mit einem einen Spülraum (4) bereitstellenden Spülbehälter (3), der der Aufnahme von zu reinigendem Spülgut (5) dient, und mit einer Wärmepumpeneinrichtung (9), die einen Verdampfer (13) aufweist, der innerhalb eines mit einem Wärmespeichermedium (21) befüllten Tanks (16) angeordnet ist,
**gekennzeichnet durch**
eine Ventilatoreinheit (17) zur Beaufschlagung des Tanks (16) mit Umgebungsluft (18) und durch eine Kondensationseinrichtung (20) zur Kondensation von in der Umgebungsluft enthaltenen Feuchte, wobei die Kondensationseinrichtung (20) eine von einer Außenoberfläche des Tanks (16) bereitgestellte Kondensationsfläche (21) und einen Sammelbehälter (23) für auf der Kondensationsfläche (21) entstehendes Kondensat (33) aufweist.

2. Geschirrspülmaschine nach Anspruch 1,
**dadurch gekennzeichnet,**
**dass** der Sammelbehälter (23) durch den Tank (16) gebildet ist.

3. Geschirrspülmaschine nach Anspruch 1 oder 2,
**dadurch gekennzeichnet, dass**
die die Kondensationsfläche (21) bereitstellende Außenoberfläche des Tanks (16) von einer in Höhenrichtung (24) des Tanks (16) oberen Tankwandung (22) bereitgestellt ist.

4. Geschirrspülmaschine nach Anspruch 3,
**dadurch gekennzeichnet, dass**
die obere Tankwandung (22) eine Durchlassöffnung (25) aufweist.

5. Geschirrspülmaschine nach Anspruch 4,
**dadurch gekennzeichnet, dass**
die obere Tankwandung (22) ein in Richtung der Durchlassöffnung (25) weisendes Gefälle aufweist.

6. Geschirrspülmaschine nach einem der vorhergehenden Ansprüche,
**dadurch gekennzeichnet, dass**
die übrigen Außenoberflächen des Tanks (16) wärmeisoliert ausgebildet sind.

7. Geschirrspülmaschine nach Anspruch 1,
**dadurch gekennzeichnet, dass**
die Kondensationsfläche (21) von wenigstens zwei Außenoberflächen des Tanks (16) bereitgestellt ist.

8. Geschirrspülmaschine nach Anspruch 7,
**dadurch gekennzeichnet, dass**
der Tank (16) geschlossen ausgebildet ist.

9. Geschirrspülmaschine nach Anspruch 7 oder 8,
**dadurch gekennzeichnet, dass**
der Tank (16) innerhalb des Sammelbehälters (23) angeordnet ist.

10. Geschirrspülmaschine nach Anspruch 9,
**dadurch gekennzeichnet, dass**
der Sammelbehälter (23) als einseitig offene Schale ausgebildet ist.

11. Geschirrspülmaschine nach einem der vorhergehenden Ansprüche,
**dadurch gekennzeichnet, dass**
der Sammelbehälter (23) an einen Luftführungskanal (34) strömungstechnisch angeschlossen ist, in welchen Luftführungskanal (34) die Ventilatoreinheit (17) integriert ist.

12. Geschirrspülmaschine nach einem der vorhergehenden Ansprüche,
**dadurch gekennzeichnet, dass**
der Tank (16) oder der Sammelbehälter (23) an eine Überlaufleitung (30) strömungstechnisch angeschlossen ist.

13. Geschirrspülmaschine nach Anspruch 12,
**dadurch gekennzeichnet, dass**
die Überlaufleitung (30) in den Spülraum (4) mündet.

14. Geschirrspülmaschine nach einem der vorhergehenden Ansprüche, **dadurch gekennzeichnet, dass**
der Tank (16) mit Kühlrippen (36) ausgerüstet ist.

## Claims

1. Dishwasher, in particular a domestic dishwasher, comprising a washing container (3), which provides a washing chamber (4) and is used to receive washware (5) to be cleaned, and comprising a heat pump device (9), which has an evaporator (13) arranged inside a reservoir (16) filled with a heat-storage medium (21),
**characterised by**
a fan unit (17) for charging the reservoir (16) with ambient air (18), and by a condensation device (20) for condensing moisture contained in the ambient air, the condensation device (20) comprising a condensation surface (21) provided by an outer surface of the reservoir (16) and comprising a collection container (23) for condensate (33) accumulating on the condensation surface (21).

2. Dishwasher according to claim 1,
**characterised in that**
the collection container (23) is formed by the reservoir (16).

3. Dishwasher according to either claim 1 or claim 2,
**characterised in that**
the outer surface of the reservoir (16), which surface provides the condensation surface (21), is provided by a reservoir wall (22) that is at the top in the vertical direction (24) of the reservoir (16).

4. Dishwasher according to claim 3,
**characterised in that**
the top wall (22) of the reservoir has a passage opening (25).

5. Dishwasher according to claim 4,
**characterised in that**
the top wall (22) of the reservoir has a gradient pointing in the direction of the passage opening (25).

6. Dishwasher according to any of the preceding claims,
**characterised in that**
the other outer surfaces of the reservoir (16) are thermally insulated.

7. Dishwasher according to claim 1,
**characterised in that**
the condensing surface (21) is provided by at least two outer surfaces of the reservoir (16).

8. Dishwasher according to claim 7,
**characterised in that**
the reservoir (16) is closed.

9. Dishwasher according to either claim 7 or claim 8, **characterised in that**
the reservoir (16) is arranged within the collection container (23).

10. Dishwasher according to claim 9,
**characterised in that**
the collection container (23) is designed as a shell open on one side.

11. Dishwasher according to any of the preceding claims, **characterised in that**
the collection container (23) is fluidically connected to an air duct (34), into which air duct (34) the fan unit (17) is integrated.

12. Dishwasher according to any of the preceding claims, **characterised in that**
the reservoir (16) or the collection container (23) is fluidically connected to an overflow line (30).

13. Dishwasher according to claim 12,
**characterised in that**
the overflow line (30) opens into the washing chamber (4).

14. Dishwasher according to any of the preceding claims, **characterised in that**
the reservoir (16) is fitted with cooling fins (36).

## Revendications

1. Lave-vaisselle, en particulier lave-vaisselle domestique, comportant un récipient de lavage (3) fournissant un espace de lavage (4) et servant à recevoir des articles à laver (5), et comportant un dispositif de pompe à chaleur (9) présentant un évaporateur (13) disposé à l'intérieur d'un réservoir (16) rempli d'un milieu accumulateur de chaleur (21), **caractérisé par**
une unité de ventilateur (17) destinée à charger le réservoir (16) en air ambiant (18), et par un dispositif de condensation (20) destiné à condenser l'humidité contenue dans l'air ambiant, le dispositif de condensation (20) présentant une surface de condensation (21) fournie par une surface externe du réservoir (16) et un récipient collecteur (23) pour le condensat (33) se formant sur la surface de condensation (21).

2. Lave-vaisselle selon la revendication 1,
**caractérisé en ce**
**que** le récipient collecteur (23) est formé par le réservoir (16).

3. Lave-vaisselle selon la revendication 1 ou 2,
**caractérisé en ce que**
la surface externe du réservoir (16) fournissant la surface de condensation (21) est fournie par une paroi de réservoir supérieure (22) dans la direction verticale (24) du réservoir (16).

4. Lave-vaisselle selon la revendication 3,
**caractérisé en ce que**
la paroi de réservoir supérieure (22) présente une ouverture de passage (25).

5. Lave-vaisselle selon la revendication 4,
**caractérisé en ce que**
la paroi de réservoir supérieure (22) présente une pente orientée dans la direction de l'ouverture de passage (25).

6. Lave-vaisselle selon l'une des revendications précédentes,
**caractérisé en ce que**
les autres surfaces externes du réservoir (16) sont conçues de manière thermiquement isolée.

7. Lave-vaisselle selon la revendication 1,
**caractérisé en ce que**
la surface de condensation (21) est fournie par au moins deux surfaces externes du réservoir (16).

8. Lave-vaisselle selon la revendication 7,
**caractérisé en ce que**
le réservoir (16) est conçu de manière fermée.

9. Lave-vaisselle selon la revendication 7 ou 8,
**caractérisé en ce que**
le réservoir (16) est disposé à l'intérieur du récipient collecteur (23).

10. Lave-vaisselle selon la revendication 9,
**caractérisé en ce que**
le récipient collecteur (23) est réalisé sous la forme d'une coque ouverte d'un côté.

11. Lave-vaisselle selon l'une des revendications précédentes,
**caractérisé en ce que**
le récipient collecteur (23) est relié par communication fluidique à un canal de guidage d'air (34), dans lequel canal de guidage d'air (34) est intégrée l'unité de ventilateur (17).

12. Lave-vaisselle selon l'une des revendications précédentes,
**caractérisé en ce que**
le réservoir (16) ou le récipient collecteur (23) est relié par communication fluidique à une conduite de trop-plein (30).

13. Lave-vaisselle selon la revendication 12,
**caractérisé en ce que**
la conduite de trop-plein (30) débouche dans l'espace de lavage (4).

14. Lave-vaisselle selon l'une des revendications précédentes,
**caractérisé en ce que**
le réservoir (16) est équipé d'ailettes de refroidissement (36).
